# EUROPEAN PATENT APPLICATION

(11) **EP 3 672 010 A1**
(43) Date of publication of application: **24.06.2020**
(21) Application number: 18213845.3
(22) Date of filing: 19.12.2018
(51) Int. Cl.: H02J 3/00, F03D 7/04, H02J 3/38, F03D 80/20, G06Q 50/06, F03D 7/02

(54) **RESIDENT PARTICIPATION IN WIND PARK CONTROL**

(71) Applicant: Siemens Gamesa Renewable Energy A/S, 7330 Brande (DK)
(72) Inventor: The designation of the inventor has not yet been filed
(74) Representative: Aspacher, Karl-Georg

(57) **Abstract**

It is described an arrangement (5), in particular computing platform, for controlling an electric energy generating plant, in particular wind turbine park (1), located in proximity of plural residents (7a, ..., 7e), the arrangement comprising: a data container (9) for holding plant operation related data (11) and resident related data (13) and in particular benefit related data; an access module (15) allowing an operator of the plant and the residents and in particular a political authority access to the data container (9); an operation mode definition module (15) adapted to define an operation mode (19), in particular in a defined time interval, of the plant based on the operation related data (11) and the resident related data (13).

## Description

### Field of invention

The present invention relates to an arrangement and to a method for controlling an electric energy generating plant, in particular wind turbine park, located in proximity of plural residents and further relates to a wind park comprising the arrangement.

### Art Background

Industrial facilities, in particular energy generating plants and further in particular wind turbines, create negative external effects. As a consequence to reduce the negative external effects, the wind turbines are curtailed (reduced in power output) to protect local residents. These external effects in the case of a wind farm most likely will be sound (noise emission) or shadow flicker. For other industrial facilities it might be a pollution or other kinds of annoyance.

In order to keep noise emission below permissible limits, wind turbines are obliged to run in a curtailed operation mode, for example in a shadow flicker mode or a sound mode. This curtailed operation mode has been defined in the planning phase of the wind farm and conventionally holds for the complete lifetime of the wind turbine without any reconsideration or questioning if initial assumptions were correct. As a result, conventional turbines may be curtailed to a higher degree than required.

Authority acts as a proxy for local residents, wherein the residents are not part of the decision chain. The decision made by the authority is made before wind farm commissioning and this decision conventionally is never changed again. Local residents might realize after commissioning of wind turbines that they are not affected by the negative external effects in that degree as identified in the planning phase. Nevertheless, the wind turbines conventionally operate in a curtailed manner under fixed conditions (for example time-based, relative to solar attitude). As a result, the wind farm owner suffers, since the total yearly energy output is smaller than it could be achieved.

Conversely, local residents might realize after commissioning of the wind turbines that they are to a larger degree negatively affected by the negative external effects than identified in the planning phase. Then a complex process has to start to measure, if the wind turbine violates conditions specified in the building permits. It might take years until this problem is solved in a satisfying way for the customer. Local residents may suffer, resulting in opposition against the specific wind farm and possibly wind energy in general.

Reasons for the aforementioned problems may be manifold:
- Turbines might behave differently than originally expected.
- Environmental conditions, for example sound propagation, might differ from planting expectations.
- Wind farm planners might use inappropriate assumptions, wrong models, etc.

Another problem is that turbines may be conventionally operated in curtailed mode, even if there is nobody that could be disturbed. For example, one or more resident(s) may be on vacation or already left for work. Still, the wind turbines conventionally operate in curtailed mode, because the information that residents are not present is not available.

Conventionally, before wind farm commissioning, a building permit is issued by an authority based on OEM (manufacturer) sound guarantees and sound propagation models. At the wind farm commissioning, the OEM installs the wind turbines. From then onward, local residents are the main stakeholders, since they might experience sound or shadow flicker problems. There is no feedback loop of any kind involved in the conventional process. In particular, the conventional setup expects that reality perfectly matches assumptions made earlier in the planning phase.

The conventional manner to protect local residents from negative external effects is to run the wind turbines in a curtailed operating mode, as described or defined in their building permits, for example shadow flicker, sound mode.

Thus, there may be a need for an arrangement and a corresponding method for controlling an electric energy generating plant, in particular wind turbine park, located in proximity of plural residents, wherein the aforementioned problems are at least reduced. In particular, it may be desirable to provide an arrangement and a corresponding method, wherein local residents are satisfied with the operation of the energy plant, in particular the wind turbine park, while power output is as high as possible.

### Summary of the Invention

The need may be satisfied by the subject-matter of the independent claims. The dependent claims are specified by particular embodiments of the present invention.

According to an embodiment of the present invention, it is provided an arrangement, in particular computing platform, for controlling an industrial production facility, in particular an electric energy generating plant, further in particular wind turbine park, located in proximity of plural residents, the arrangement comprising: a data container for holding plant operation related data and resident related data and in particular benefit related data; an access module allowing an operator of the plant and the residents and in particular a political authority access to the data container; an operation mode definition module adapted to define an operation mode, in particular in a defined time interval, of the plant based on the operation related data and the resident related data.

The arrangement, in particular computing platforms, such as a computer server or computer server park, may for example be connected to the internet. Residents and/or the plant operator may access the arrangement for example via the internet, for example via an internet browser or Applet or (mobile) App. On the computing platform, in particular computer server, software may be executed allowing access via the access module to the data container.

The data container may for example be implemented in a database or any other data structure suitable for holding the plant operation related data and the resident related data in a structured manner, which can be queried/changed, deleted and so forth in a reliable manner. The database may for example be a relational database or an object-based database or a combination thereof.

The plant operation related data relate to the operation of the plant including for example operational parameter values, (e.g. theoretically derived and/or measured) noise emission data, (e.g. theoretically derived and/or measured) shadow flicker data, power output data, and so forth. Additionally or alternatively noise emission data may be calculated from operational parameter values using models. Further they may be differentiated from actual measurement data (like power, wind speed, etc.).

The resident related data may relate to data of or entered by the residents as will be explained below in more detail.

Portions of the data container or particular data may be protected from being accessed by either the resident and/or the operator. Thus, there may be restricted access depending on the type of data within the data container to the operator and/or the resident. For example, any resident may be prohibited from entering any plant operation related data and the plant operator may be prohibited from entering any or changing any of the resident related data. When the data container contains both, plant operation related data as well as resident related data, the operation mode definition module advantageously can take into account the plant operation related data as well as the resident related data in order to define the operation mode which is then to be applied to operate the industrial production facility, in particular an electric energy generating plant. Thereby, the interest of the residents may be taken care of, while in particular energy output or power output may also be considered. Thereby, the residents may take part on the decision what operation mode is applied for operating the energy generating plant. Thereby, preferences entered by the residents may influence the definition of the operation mode.

Thereby, the actual operation impact to the resident may be taken into account instead of taking into account an estimated or assumed or expected operation impact as determined during a planning phase or merely based on potentially inaccurate models or assumptions. Thereby, both, a resident satisfaction and wind park performance may be improved.

According to an embodiment of the present invention, the access module allows the operator to enter the operation related data and in particular the benefit related data, and/or the residents to enter the resident related data, in particular upon authentication, further in particular in an encrypted manner.

The operator may for example be the owner of the electric energy generating plant. The operator may obtain detailed knowledge of the configuration of the energy plant and may also have accurate knowledge of any operational mode and the associated operation related data. The operator (or any other party) may for example enter or define the benefit related data which may relate to benefits which may be received by residents upon accepting a higher negative operation impact or operation mode with higher external costs as for example set by the legal regulations. The resident related data may for example include personal data of the residents as will be explained in detail below.

By allowing the operator and the residents to enter the data, the data contained may be filled with data by those persons who are in possession of the respective data.

According to an embodiment of the present invention, the operation related data comprise at least one of: a location information of plant units forming the plant, if applicable, or of the entire plant; operation parameters for plural operation modes of the plant; power output data for the plural operation modes; operation impact data for the plural operation modes indicative of the impact, in particular noise, light flicker, of operation, according to the respective operation mode, on at least one or more of the residents; and/or operational constraints regarding limit of operation impact to residents and/or limit of energy output and/or baseline power output or baseline energy output.

Thereby, all relevant data defining the operation and its impact to the residents may be stored within the data container. These data may be considered for defining the operation mode by the operation mode definition module. Even more operation related data may be considered as well.

According to an embodiment of the present invention, the benefit related data comprise reward data indicative of rewards to be received by the residents: if a particular operation mode is applied, and/or if an operation mode is temporarily extended compared to baseline allowance in building permit, and/or if an operation mode is applied that causes higher negative impact than permitted due to regulations, wherein the rewards is in particular determined based on the particular operation impact the resident is subjected to.

The residents may receive a benefit, such as a financial benefit, if they for example accept in or agree with operating the energy plan in an operational mode which has negative external effects or negative impact higher than set by legal rules. Promising a benefit to the residents may assist to have them accept an operational mode which results in relatively high power output but which may negatively impact the residents. Anyhow, the residents are not urged to accept an operational mode which is annoying to them without receiving a benefit.

According to an embodiment of the present invention, the resident related data comprise at least one of: resident location; resident identity; resident schedule data, in particular including at least one of: at least one vacation schedule; at least one absence schedule; one or more time interval(s) during which the resident is present or absent from his resident location, in particular specified per week day or particular dates or particular times; resident preference data, in particular including at least one of: one or more operation modes acceptable at one or more time intervals; one or more operation modes not acceptable at one or more time intervals.

Further resident related data may be stored within the data container and may be entered by the residents. If resident schedule data are also comprised in the resident related data, the scheduling of different operation modes at different time intervals for example, may be defined in an improved manner. During time intervals, in which the resident is absent from his home, even operating the energy generating plant at an operational mode resulting in relatively high power output, may not disturb or annoy the resident, even if the noise emissions or operational impact in general is above legal limits. Thereby, energy output may be increased. Conversely, if the operational definition module takes into account time ranges or time intervals, in which the resident is present at his home, in these time intervals, the operational mode may be defined to cause comparably less negative impact on the residents.

According to an embodiment of the present invention, the operation mode definition module is configured to select from the plural operation modes using a selection logic including at least the resident preference data and/or the power output data and/or the operation impact data and/or the operational constraints, to define the operation mode.

The plural operation modes may have been entered by the operator or may be predefined operation modes. Selecting from plural operation modes may simplify the process of defining the operation mode to be applied. When the resident preference data are taken into account for the selection, resident satisfaction may be increased. Furthermore, when also the power output for the different operation modes is taken into account, also the power output may be improved (e.g. increased). Furthermore, any operational constraints, as for example set by a grid operator, may be complied with. In particular, embodiments of the present invention may ensure that any operational constraints are met which are for example set by a legal authority such as a government or a network operator.

According to an embodiment of the present invention, the selection logic is configured to achieve a compromise of complying with resident preferences and minimizing power output curtailment.

The selection logic may be configurable in the way that a rule set may be changeable and/or in the way that parameters or factors which are considered may be changed or adapted, as required. The selection logic may for example be configured as a decision tree.

According to an embodiment of the present invention the operation mode definition module is configured to apply a weighting on the resident preference data based on resident location and/or resident schedule data and/or sound propagation estimation and/or shadow flicker analysis and/or resident state.

A voting weight of different residents may be different depending on the location of the resident and/or other resident related data. The weighting of one resident may for example be the higher the larger the negative impact is on this resident compared to other residents. Particular residents may have particular states such that the weighting may also depend on the state of the resident (for example a particular sensitive resident or sick or disabled resident more frequently at home than on average). The weighting may be calculated automatically from the resident related data in dependence of operational related data.

According to an embodiment of the present invention, the operation mode definition module is configured to iteratively define the operation mode by applying an operation mode, receiving feedback from residents and maintain or change the operation mode or select another operation mode depending on the feedback.

For example, repeatedly a voting by residents may be performed judging on the previous or current operational mode which had been applied earlier. Depending on the result of the voting (including weighting of votes), the operation mode may be maintained or changed. Thereby, resident satisfaction may be improved.

According to a further embodiment more resident entered data may be available over time. This data may be used by a machine learning algorithm to predict the voting of residents in future operation. This may enable the software to predict resident votings in the future, and finally to make decisions autonomously rather than necessarily requiring further resident voting or input.

According to an embodiment of the present invention, the operation mode definition module is configured to define that operation mode: which has highest number of resident votes of acceptance; for which not any eligibly group of residents vetoes the operation mode having highest number of votes of acceptance; according to a definition by a master.

Different decision methodologies may be applied, which may be selected based on the particular application or based on experience.

According to an embodiment of the present invention, the arrangement is further configured to determine, based on the defined operation mode, compensation or reward for residents, and/or to determine revenue sharing between operator and one or more residents, in particular depending on operation impact to the resident.

The compensation or reward for the residents may for example be determined based on a difference between power output of the actual defined operational mode and the power output of the operational mode which is set according to legal regulations (baseline) for keeping the negative impact or negative external effects below legal limits. Similarly, revenue sharing may be determined.

According to an embodiment of the present invention, the arrangement further comprises an interface for coupling to a plant control system, wherein the defined operation mode is communicated to the plant control system via the interface, wherein the plant control system controls the plant according to the defined operation mode.

Before controlling the energy plant according to the defined control mode, the control mode may be subjected to review by an expert, for example the operator or the owner of the energy plant. Only upon approval by the expert, the energy plant may be controlled by the defined control mode. In other embodiments, in particular after running and adapting the operation mode definition module, in particular the selection logic, the defined operation mode may directly and automatically be applied for controlling the energy plant.

Instead of controlling an energy plant, any other industrial facilities may be controlled using embodiments of the present invention. The arrangement may be connectable to the internet and/or may comprise a web application and/or the data container may be configured as a blockchain. A blockchain may prohibit any alteration or erasing of previously entered and stored data. Thereby, trust may be improved.

Furthermore, a wind park is provided comprising plural wind turbines and an arrangement according to one of the precedingly described embodiments. Thereby, the arrangement is connected to control the wind turbine (directly or via a review process or previously subjected to a review process).

It should be understood that the features, individually or in any combination, disclosed, described, explained or applied, to an arrangement for controlling an energy generating plant, may also be, individually or in any combination, apply to a method of controlling an electric energy generating plant, according to embodiments of the present invention and vice versa.

According to an embodiment of the present invention, it is provided a method, in particular implemented in a computing platform, of controlling an electric energy generating plant, in particular wind turbine park, located in proximity of plural residents, the method comprising: using a data container for holding plant operation related data and resident related data and in particular benefit related data; accessing, by an operator of the plant and the residents and in particular a political authority access, the data container; defining an operation mode, in particular in a defined time interval, of the plant based on the operation related data and the resident related data.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

Fig. 1 schematically illustrates a wind park according to an embodiment of the present invention comprising an arrangement for controlling the wind park according to an embodiment of the present invention; and
Fig. 2 schematically illustrates a control scheme according to the embodiments of the present invention.

### Detailed Description

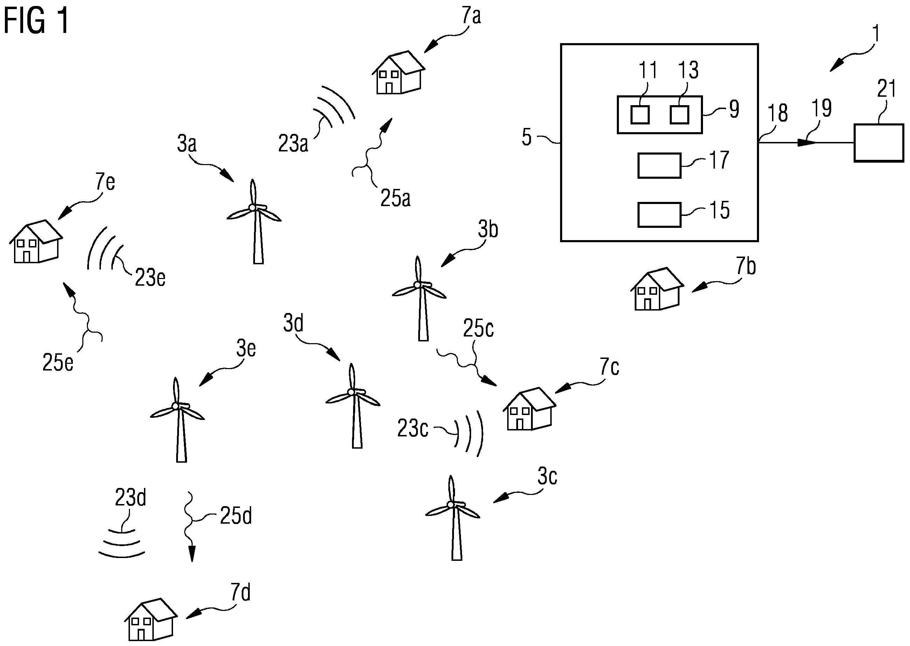

The wind park 1 schematically illustrated in Fig. 1 comprises plural wind turbines 3a, 3b, 3c, 3d, 3e. The wind park further comprises an arrangement 5 for controlling the wind park 1, which is located in proximity of plural residents 7a, 7b, 7c, 7d, 7e according to an embodiment of the present invention. Thereby, the arrangement 5 comprises a data container 9 for holding plant operational related data 11 and resident related data 13. The arrangement 5 further comprises an access module 15 allowing an operator of the wind park 1 and the residents 7a, 7b, 7c, 7d, 7e access to the data container 9. Furthermore, the arrangement 5 comprises an operation mode definition module 17 which is adapted to define an operation mode of the plant 1 based on the operational related data 11 and the resident related data 13.

In the illustrated embodiment, the defined operation mode is communicated using an operation mode signal 19 to a wind park controller 21, which is, via interface 18 of the arrangement 5, communicatively connected by (not illustrated) communication lines to the plural wind turbines 3a, 3b, 3c, 3d, 3e for supplying to the wind turbines control signals in order to control the respective wind turbines.

Upon operating the wind turbines according to a particular park operation mode 19 may involve to operate the individual wind turbine with individually assigned individual wind turbine operation modes. For example, wind turbines 3a and 3b may be operated using different individual wind turbine operation modes. The individual wind turbine specific operation modes may be encoded within the park operation mode signal 19. In other embodiments, all wind turbines 3a, ..., 3e may be operated with the same operation mode as defined by the operation mode definition module 17.

According to an embodiment the platform 5 may comprise a sound propagation module and/or a shadow flicker module These modules may make use of models that estimate sound propagation and/or shadow flicker based on turbine locations and operating modes.

Each wind turbine 3a, ..., 3e is an example of a plant unit being a unit of an energy generating plant, which is controlled using embodiments of the present invention. Each of the wind turbine 3a, ..., 3e is characterized by its particular location within the wind farm 1 and the location information may be considered for defining the operation mode. Furthermore, individual power output data representing the power output upon operating the wind turbines according to a particular operation mode, may be considered by the operation mode definition module 17 for defining the operation mode.

Upon operating the wind turbine, the residents 7a, ..., 7e are subjected to operation impact, such as noise 23a, ..., 23e and also light flicker as symbolized with a wavy line 25a, ..., 25e as received by the individual residents 7a, ..., 7e. Also the operation impact data (for example noise 23a, ..., 23e, light flicker 25a, ..., 25e) may be considered by the operation mode definition module 17 for defining the operation mode to be applied.

The individual residents 7a, ..., 7e may also enter into the arrangement 5 via the access module 15 resident preference data expressing their preference regarding the operation mode to be applied. Furthermore, a weighting on residents modes may be applied depending for example on a distance between the resident location and one or more of the wind turbines of the wind park 1 and/or e.g. depending on a result obtained by a sound propagation module.

For other industrial facilities than a wind park the arrangement may also be applied. Thereby, negative external effects or impact of the industrial facility to the local resident may also include for example pollution.

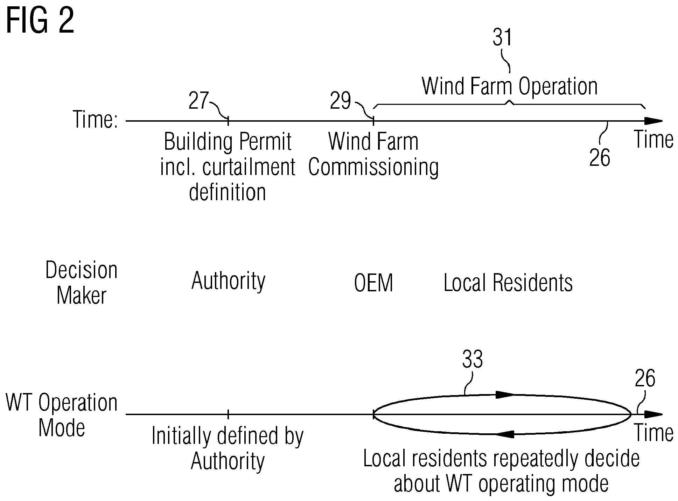

Fig. 2 schematically illustrates a control scheme as may be applied according to embodiments of the present invention, which may partly be performed by the arrangement 5 illustrated in Fig. 1. The horizontal lines 26 represent the time. In particular, at a time point 27 the wind park receives a building permit including a curtailment definition defining the curtailment of power output in order to keep external negative effects to residents below legal thresholds. At a time point 29 wind farm commissioning occurs and during a time interval 31 the wind farm is operated.

For issuing the building permit an authority is the decision maker. For wind farm commissioning, the OEM is the decision maker and during wind farm operation (timespan 31) the local residents are at least participants of the decision and thus are partly the decision makers.

In particular, when the wind farm 1 starts operation, local residents may get access to the arrangement 5 (in particular platform), where they can insert information about annoyance of the wind farm 1. This information is then analysed (for example in the operation mode definition module 17) and an operation mode is chosen to overcome a target conflict of the operator versus the residents. With this system, a win-win situation may be reached in which the annoyance of residents is minimized and/or additional revenue is generated that then can be shared between parties, for example operator and residents.

Residents, wind farm operators or owners and possibly any legal authority may have access to the central system (platform) for example the arrangement 5 illustrated in Fig. 1. The platform 5 stores (e.g. in the data container 9) information about wind farm operation modes/schedules, resident feedback on their assessment about annoyance, resident votes, additional revenue (versus baseline operation), revenue share, etc. Preferably, the arrangement 5 is implemented as a mobile/web-based system to enable all participants to have access.

As can be taken from Fig. 2 in the time period 31 of wind farm operation, the local residents repeatedly decide about wind turbine operation mode as illustrated in a closed loop 33.

In a conventional system, local residents are not part of the decision making process and do not repeatedly decide about the wind turbine operating mode. Instead, conventionally, the wind turbines are operated in a predefined mode during the time span 31.

Authentication, combined with cryptographic methods, may be applied for data protection.

To avoid manipulation of the data and to increase acceptance of the system, it might be implemented in a blockchain. By this, the information is immutable for any given point in time. Preferably, all participants may have the possibility to download the complete history (blockchain). This intends to prevent operators for corrupting information about real operation later on to reduce potential compensation payments to residents. Residents/wind farm operators may have an inherent incentive to frequently use the platform 5. Residents could aim at reducing annoyance/maximizing yield. Operator may aim at maximizing yield. In particular, the manufacturer of the wind turbine may be the owner of the platform 5.

Turbine control strategy currently can be adapted manually. Whenever there is a requirement of applying another curtailment strategy, this can be manually changed in the turbine software. Ideally, the control system may be adapted in any way to either pull updated curtailment strategies from proposed platform 5 or the platform 5 might push the information (in particular control signal 19) to the wind turbine control system 21. In either way, there may be interfaces defined and implemented to set up an integrated system of platform 5 and turbine control system 21. This interface could be implemented as a notification sent to the operator of the wind park. The operator then may decide to apply or not to apply alternative control methods.

According to the embodiments of the present invention, the arrangement 5 also supports a votes/reward system. Residents can be rewarded some financial benefit if they accept slightly higher sound power levels or more shadow flicker than legally defined. Thereby an incentive is provided and the incentive may be a financial compensation, but might be non-financial compensation as well.

For the acceptance of higher noise, residents may get a compensation as ratio of revenue (revenue sharing) according to an embodiment. This may have the effect that the wind farm owner generates higher revenues (compared to baseline "wind farm curtailment") and the residents may get any reward as part of additional revenues. With this reward system, the problem of conflicting objectives may be solved.

According to a further embodiment of the arrangement of the present invention, the arrangement may include a staggered system of reward claims for different residents. For example, residents most affected by the wind farm (for example closest to the wind farm, for example resident 7c in Fig. 1) may get more rewards (or a higher weighting of their expressed preferences) than residents less affected (for example more distinct to the wind park, for example resident 7d illustrated in Fig. 1). Models for sound propagation/shadow flicker may be applied for the assignment of reward claims.

It might even be possible to trade vote rights between parties. The proposed solution may provide more power to local residents, i.e. more participation for deciding on the operation mode to be applied for wind turbines of a wind park. In particular, the residents may get or obtain the power to dynamically change operating mode to reduce the impact of sound or shadow flicker.

The platform may harbour the following information:
- Each resident may add/update her or his personal information (for example)
- Resident location - being relevant for specific sector-wise mode operation
- Acceptable modes. These may be the operating modes that are acceptable to the resident.
- As a further refinement or as another embodiment, acceptable modes might be added with reference to week of day, time of day. For example, if the resident gets up at 4 a.m., it might not be necessary to operate in curtailed mode until 7 a.m.
- Availability - the idea is, that the turbine does not have to be curtailed if the resident is on vacation or on a business trip.

Since residents might not be able to make sound decisions about acceptable modes, an iterative method may be applied. For a defined period of time, for example one night or several nights (because wind conditions may vary strongly and sound annoyance very much depends on it), an operation mode may be defined and applied. Each resident may then be enabled to access the sound performance or to assess the sound performance. Preferably, this may be implemented in a scale (0 ... no annoyance, 10 ... highly annoyed). This information may then be entered into the arrangement 5 and analysed for subsequent periods (for example the following nights).

According to a further embodiment residents may be asked for feedback (or have the opportunity to enter their preferences/wishes/proposals) not once per night, but on a more granular (fine) level. This way it may be possible not just to choose between existing operating modes but rather create a (new) operating mode depending on wind speeds. Thereby it may e.g. be avoided to curtail wind turbines at high wind speeds, as may be done in the state of the art, without providing any benefit. At high wind speeds, background noise (e.g. trees, gusts) may be so high to exceed the noise generated by turbines.

Wind farm operators/owners may add the following information:
- Wind turbine locations
- Wind turbine operation modes (preferably in combination with a time span, on 10 min base)
- Additional revenue due to extended operation (compared to baseline allowance and building permit, 10 min base)
- Votes per resident (depending on sound propagation models, sound flicker analysis).

The platform 5 may then calculate and provide the following information:
- Operation mode decision method for each 10 min time span.
- Operation mode for each 10 min time span.
- Total compensation in Euro for each 10 min time span.
- Compensation for each resident/operator for each 10 min time span.

There are several possibilities for arriving at the definition of the operation mode or making the decision about the operating mode as is explained in the following.

The decision about operating modes may be made by a central tool used by residents. Different options are possible:
- Democracy: The operation mode receiving most votes gets selected and will be used for a specified time
- Veto-rights/minority protection: Specific residents or a small group of residents (possibly who are most affected by the wind farm) may obtain a veto-right, which means that even if the group decision (democracy scheme) differs, these veto-rights overrule the group decision or the majority decision.
- Master: It might be that there is not a solution found that satisfies all parties so that a higher-ranking party is required. This party might have the power to overrule all other parties and make a decision independently. Most likely, this will be the legal authority.

The system might be set up so that:
a. At no time an operating mode with less power compared to baselines (officially defined operating mode by authority) is allowed.
b. An average performance has to be above baseline performance.

There is usually no incentive for the operator to operate the wind farm in a way that average performance is below baseline. The only exceptional situation might be to avoid "greater harm", for example a re-analysis of operating modes by authority with the expectation of more restrictive operation modes.

In case a., it may be ensured that there is always a revenue greater or equal to baseline revenue.

In case b., an average period needs to be defined over which average performance needs to be above baseline performance. This might be preferably a month, a year or another period agreed by the parties.

The following advantages may be achieved by the embodiments of the present invention:
- Generally, a win-win situation for residents and operators may be achieved.
- Acceptance of wind energy may increase if local residents make decisions that directly affect them.
- Shortcomings of current system setup may be overcome. Either the residents improve their situation (for example reduced noise) or the owner of the wind park improves his situation of having for example additional yield. Most likely, a mixture of both will happen.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Arrangement (5), in particular computing platform, for controlling an industrial production facility, in particular an electric energy generating plant, further in particular a wind turbine park (1), located in proximity of plural residents (7a, ..., 7e), the arrangement comprising:
a data container (9) for holding plant operation related data (11) and resident related data (13) and in particular benefit related data;
an access module (15) allowing an operator of the plant and the residents, and in particular a political authority, access to the data container (9);
an operation mode definition module (15) adapted to define an operation mode (19), in particular in a defined time interval, of the plant based on the operation related data (11) and the resident related data (13).

2. Arrangement according to the preceding claim, wherein the access module (15) allows:
the operator to enter the operation related data (11) and in particular the benefit related data, and/or
the residents to enter the resident related data (13), in particular upon authentication, further in particular in an encrypted manner.

3. Arrangement according to one of the preceding claims, wherein the operation related data (11) comprise at least one of:
location information of plant units (3a, ..., 3e) forming the plant, if applicable, or of the entire plant (1);
operation parameters for plural operation modes of the plant;
power output data for the plural operation modes;
operation impact data (23, 25) for the plural operation modes indicative of the impact, in particular noise (23), light flicker (25), of operation, according to the respective operation mode, on at least one or more of the residents; and/or
operational constraints regarding limit of operation impact to residents and/or limit of energy output and/or baseline power output or baseline energy output.

4. Arrangement according to one of the preceding claims, wherein the benefit related data comprise reward data indicative of rewards to be received by the residents:
if a particular operation mode is applied, and/or
if an operation mode is temporarily extended compared to baseline allowance in building permit, and/or
if an operation mode is applied that causes higher negative impact than permitted due to regulations,
wherein the rewards is in particular determined based on the particular operation impact the resident is subjected to.

5. Arrangement according to one of the preceding claims, wherein the resident related data (13) comprise at least one of:
resident location;
resident identity;
resident schedule data, in particular including at least one of:
at least one vacation schedule;
at least one work schedule;
one or more time interval(s) during which the resident is present or absent from his resident location, in particular specified per week day or particular dates;
resident preference data, in particular including at least one of:
one or more operation modes acceptable at one or more time intervals;
one or more operation modes not acceptable at one or more time intervals.

6. Arrangement according to one of the preceding claims, wherein the operation mode definition module (17) in configured to select from the plural operation modes using a selection logic including at least the resident preference data and/or the power output data and/or the operation impact data and/or the operational constraints, to define the operation mode.

7. Arrangement according to one of the preceding claims, wherein the selection logic is configured to achieve a compromise of complying with resident preferences and minimizing power output curtailment.

8. Arrangement according to one of the preceding claims, wherein the operation mode definition module (17) is configured to apply a weighting on the resident preference data based on resident location and/or resident schedule data and/or sound propagation estimation and/or shadow flicker analysis and/or resident state.

9. Arrangement according to one of the preceding claims, wherein the operation mode definition module (17) is configured to interatively (33) define the operation mode (19) by applying an operation mode, receiving feedback from residents and maintain or change the operation mode or select another operation mode depending on the feedback.

10. Arrangement according to one of the preceding claims, wherein the operation mode definition module (17) is configured to define that operation mode:
which has highest number of resident votes of acceptance;
for which not any eligibly group of residents vetoes the operation mode having highest number of votes of acceptance;
according to a definition by a master.

11. Arrangement according to one of the preceding claims, further configured:
to determine, based on the defined operation mode, compensation or reward for residents, and/or
to determine revenue sharing between operator and one or more residents, in particular depending on operation impact to the resident.

12. Arrangement according to one of the preceding claims, further comprising:
an interface (18) for coupling to a plant control system (21), wherein the defined operation mode (19) is communicated to the plant control system via the interface,
wherein the plant control system controls (21) the plant (1) according to the defined operation mode (19).

13. Arrangement according to one of the preceding claims, wherein the arrangement is connectable to the internet, and/or comprises a web application and/or the data container is configured as a blockchain.

14. Wind park (1), comprising:
plural wind turbines (3a, ..., 3e); and
an arrangement (5) according to one of the preceding claims, connected to control the wind turbines (3a, ..., 3e).

15. Method, in particular implemented in a computing platform (5), of controlling an electric energy generating plant, in particular wind turbine park (1), located in proximity of plural residents (7a, ..., 7e), the method comprising:
using a data container (9) for holding plant operation related data (11) and resident related data (13) and in particular benefit related data;
accessing, by an operator of the plant and the residents (7a, ..., 7e) and in particular a political authority access, the data container (9);
defining an operation mode (19), in particular in a defined time interval, of the plant based on the operation related data (11) and the resident related data (13).
